Europäisches Patentamt

European Patent Office

Office européen des brevets

(11) Veröffentlichungsnummer: **0 143 268**
**A2**

## EUROPÄISCHE PATENTANMELDUNG

(21) Anmeldenummer: 84111662.7

(22) Anmeldetag: **28.09.84**

(51) Int. Cl.⁴: **H 04 J 3/08**, H 04 J 3/16, H 04 L 25/49

(30) Priorität: **29.09.83 DE 3335352**

(43) Veröffentlichungstag der Anmeldung: **05.06.85 Patentblatt 85/23**

(84) Benannte Vertragsstaaten: **AT CH DE FR IT LI**

(71) Anmelder: **Siemens Aktiengesellschaft, Berlin und München Wittelsbacherplatz 2, D-8000 München 2 (DE)**

(72) Erfinder: **Thoma, Wolfgang, Dr., Rueppstrasse 34, D-8000 München 71 (DE)**
Erfinder: **Appelmann, Wolfgang, Dipl.-Ing., Ringstrasse 1, D-8000 München 70 (DE)**

(54) Verfahren und Anordnung zum Einfügen eines digitalen binären Schmalbandsignals in ein oder zum Abtrennen dieses Schmalbandsignals aus einem Zeitmultiplexsignal.

(57) Die Übertragungsstrecke für ein Zeitmultiplexsignal in einer Richtung enthält einen Einkoppler (5) und die Übertragungsstrecke der Gegenrichtung einen Auskoppler (12). Mit diesen Elementen wird in ein oder aus einem Zeitmultiplexsignal, das ein 5B/6B-codiertes Breitbandsignal (DBS1, DBS2) enthält, im Austausch gegen Füllwörter ein Schmalbandsignal (ISDN1 bzw. ISDN2) ein- bzw. ausgekoppelt. Dieses enthält nur solche 6B-Codewörter, die für ein 5B-Codewort der positiven und negativen Gruppe gleich sind, was einen geringen Geräteaufwand bedingt. Dieses Verfahren ist für die Einfügung von ISDN-Signalen in Bildsignale einer Bitrate von 34 oder 140 Mbit/s vorteilhaft.

0143268

SIEMENS AKTIENGESELLSCHAFT

Berlin und München

Unser Zeichen

VPA 83 P 1752 E

Verfahren und Anordnung zum Einfügen eines digitalen binären Schmalbandsignals in ein oder zum Abtrennen dieses Schmalbandsignals aus einem Zeitmultiplexsignal.

Ein Verfahren zum Einfügen eines digitalen binären Schmalbandsignals in ein oder zum Abtrennen dieses Schmalbandsignals aus einem Zeitmultiplexsignal ist aus der Zeitschrift "TELCOM REPORT", 2 (1979) Beiheft Digital-Übertragungstechnik, Seite 46 bis 51 bekannt. In einem Digitalsignal-Einfügungsgerät DSE 64K/2 werden vier 64-kbit/s-Digitalsignale in ein 2048-kbit/s-Digitalsignal eingefügt oder von diesem wieder abgetrennt. An der Einfügungsstelle wird der Leitungscode des 2048-kbit/s-Digitalsignals decodiert, werden die 64-kbit/s-Digitalsignale mit dem Stopfverfahren in vorgegebene Plätze des 2048-kbit/s-Digitalsignal eingefügt und wird der Leitungscode wieder neu gebildet. Nach weiterer Übertragung können die 64-kbit/s-Digitalsignale nach Decodierung des Leitungscodes wieder abgetrennt werden.

Dieses Verfahren hat den Nachteil, daß der Leitungscode an der Einfügungsstelle decodiert und neu codiert werden muß, was bei Digitalsignalen mit höheren Bitraten wie 34 Mbit/s recht aufwendig wäre. Dasselbe gilt für das Stopfverfahren.

Ein ähnliches Verfahren zum Einfügen von Teilsignalen ist bei dem PCM-Tonkanalsystem MStD angewendet, das in derselben Zeitschrift auf den Seiten 52 bis 58 beschrieben ist. Bei diesem System wird das Teilsignal nicht mit

Wke 1 Kom / 26.09.1983

dem Stopfverfahren, sondern in der Regel synchron eingefügt, was weniger aufwendig ist, aber einen Synchronismus zwischen den Taktfrequenzen des Teilsignals und des
Digitalsignals voraussetzt.

Ein weiteres Verfahren zur Einfügung eines digitalen
Teilsignals in ein Digitalsignal wird bei der Übertragung einer E&M-Signalisierungsinformation bei der Zeitmultiplexeinrichtung PCM30F angewendet, welche auf den
Seiten 35 bis 41 der genannten Zeitschrift beschrieben
ist. Die digitale Signalisierungsinformation wird mit
einer Frequenz von 500 oder 1000 Hz abgetastet, die
erheblich größer als die doppelte Bitfolgefrequenz des
digitalen Signalisierungssignals ist und zu dieser nicht
synchron sein muß. Jede Abtastprobe wird mit einem Bit
übertragen. Empfangsseitig wird das Signalisierungssignal auf sehr einfache Weise wiedergewonnen.

Dieses Verfahren ist zwar mit einem sehr geringen Geräteaufwand verbunden, hat aber den Nachteil, daß die Bitrate für die Übertragung des Teilsignals erheblich höher ist als die Bitrate des Teilsignals allein. Dieser
Nachteil ist nur dann geringfügig, wenn die Bitraten,
die für die Übertragung des Teilsignals im Digitalsignal
zur Verfügung stehen, nicht knapp bemessen werden müssen.

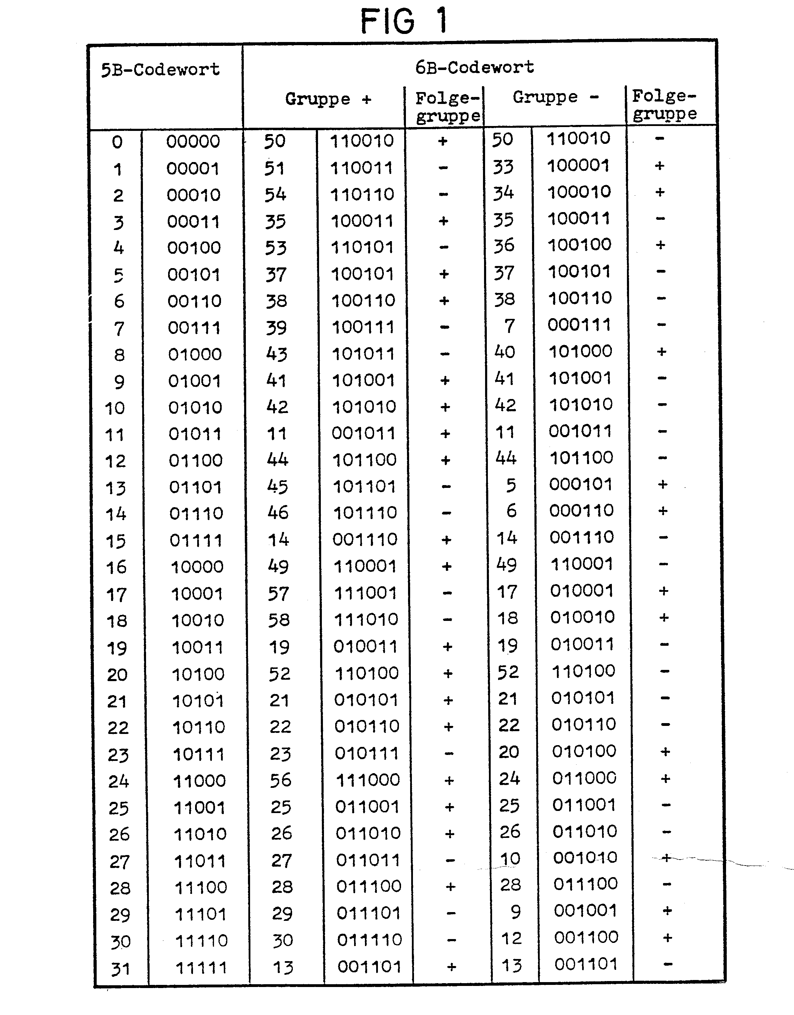

Digitale Breitbandsignale werden für die Übertragung
mit einem bisher nicht genannten Leitungscode codiert,
um Gleichstromfreiheit zu erzielen und um das Leistungsspektrum des übertragenen Signals in geeigneter Weise
zu beeinflussen. Für die Digitalsignal-Übertragung,
insbesondere über Glasfasern, hat sich der 5B/6B-Code
als günstig erwiesen, der in der Zeitschrift "TELCOM
REPORT", 6 (April 1983) Beiheft Nachrichtenübertragung
mit Licht, Seiten 133 bis 137, Tabelle 2 und in Figur 1
aufgeführt ist.

- 3 -    VPA    83 P 1752 E    0143268

Bei diesem Leitungscode wird ein nicht codiertes Digitalsignal in fünf bit lange unmittelbar aufeinander folgende Blöcke aufgeteilt. Diese sind die 5B-Codewörter. Entsprechend der Codetafel nach Fig. 1 werden die 5B-Codewörter in sechs bit lange 6B-Codewörter umgesetzt, was mit einer Erhöhung der Bittaktfrequenz um 20% verbunden ist. Ob ein 6B-Codewort in der Codetafel der Spalte der positiven Gruppe (Gruppe +) oder der Spalte der negativen Gruppe (Gruppe -) entnommen wird, hängt davon ab, welche Folgegruppe bei dem vorangegangenen 6B-Codewort angegeben war. Der Wechsel zwischen den beiden Gruppen findet mit dem Ziel statt, die aufsummierte Anzahl der Nullen und Einsen in der Folge der 6B-Codewörter möglichst weit auszugleichen, um Gleichstromfreiheit zu erzielen. Unter den zweiunddreißig 5B-Codewörtern gibt es achtzehn, denen für beide Gruppen das gleiche 6B-Codewort zugeordnet ist. Die Folgegruppe hat bei diesen 6B-Codewörtern das gleiche Vorzeichen wie die Gruppe selbst. Diese, in beiden Gruppen gleichen 6B-Codewörter können durch beliebige andere 6B-Codewörter ersetzt werden ohne daß die Regel verletzt wird, nach der das Vorzeichen der Folgegruppe ausgesucht worden war.

Die Aufgabe der Erfindung besteht darin, ein Verfahren anzugeben, daß die nachträgliche Einfügung und separate Abtrennung eines einzelnen digitalen Teilsignals mit vergleichsweise kleiner Bitrate in ein 5B/6B-codiertes Digitalsignal unter geringem Geräteaufwand gestattet.

Diese Aufgabe wird erfindungsgemäß dadurch gelöst, daß im Zeitmultiplexsignal ein Breitbandsignal mit Synchron-Wort in einem binären 5B/6B-Leitungscode, der für einige 5B-Codewörter in der positiven und negativen Gruppe gleiche 6B-Codewörter (Auswahlcodewörter) enthält, sowie zusätzliche Auswahlcodewörter als Füllwörter übertragen werden, daß für das Schmalbandsignal ebenfalls der

*0143268*

5B/6B-Leitungscode und ausschließlich Auswahlcodewörter verwendet werden, daß das Schmalbandsignal am Einfügungsort synchron gegen wenigstens ein Füllwort ausgewechselt wird und daß das Schmalbandsignal am Abtrennort aufgrund des Synchronwortes erkannt und ausgekoppelt wird.

Hierbei ist insbesondere an das Einfügen und Abtrennen eines digitalen ISDN-Signals (Integrated Services Digital Network) in ein/digitalen Bildsignal gedacht. Dabei besteht die Vorstellung, daß das Bildsignal im Endgerät (Bildtelefon) in die 5B/6B-leitungscodierte Form gebracht wird und in einem weiteren Gerät im Teilnehmerbereich (Teilnehmeranschlußgerät) durch das ISDN-Signal ergänzt wird, welches Telefon- und Datensignale enthalten kann.

Weiter wird angenommen, daß im Netzknoten (Teilnehmervermittlungsstelle) das 5B/6B-leitungscodierte Bildsignal in einem Bildkoppelfeld vermittelt wird, daß aber das digitale ISDN-Signal vorher von dem digitalen Bildsignal abgetrennt wird, denn das ISDN-Signal ist nicht zwingend bildbegleitend.

Für das ISDN-Signal wird hier eine Bitrate von 160 kbit/s angenommen, obwohl die Erfindung auch für andere Bitraten, beispielsweise 80 kbit/s, gilt. Für das Bildsignal wird weiter eine Bitrate von etwa 34 Mbit/s angenommen, obwohl die Erfindung auch für Bildsignale mit beispielsweise 140 Mbit/s anwendbar ist.

Eine erste Variante des erfindungsgemäßen Verfahrens ist dadurch gekennzeichnet, daß bei der Bildung des Zeitmultiplexsignals von einem 34,368-Mbit/s-Digitalsignal mit CCITT-Pulsrahmen als Grundrahmen ausgegangen wird, daß das Zeitmultiplexsignal mit dem Breitbandsignal der 5B/6B-Leitungscodierung unterworfen wird, daß aus fünf aufeinanderfolgenden Grundrahmen ein

0143268

Überrahmen gebildet wird, daß das Rahmenkennungswort des ersten Grundrahmens im Überrahmen als Überrahmenkennungswort in zwei 6B-Codewörtern liegt und daß je Überrahmen eine feste Anzahl 6B-Codewörter als Füllwörter dienen. Dazu wird ein leitungscodiertes Schmalbandsignal einer Bitfolge von $\frac{5}{6} \cdot 716$ kbit/s gewählt und es folgen dazu dem Überrahmenkennungswort unmittelbar zweiunddreißig Füllwörter.

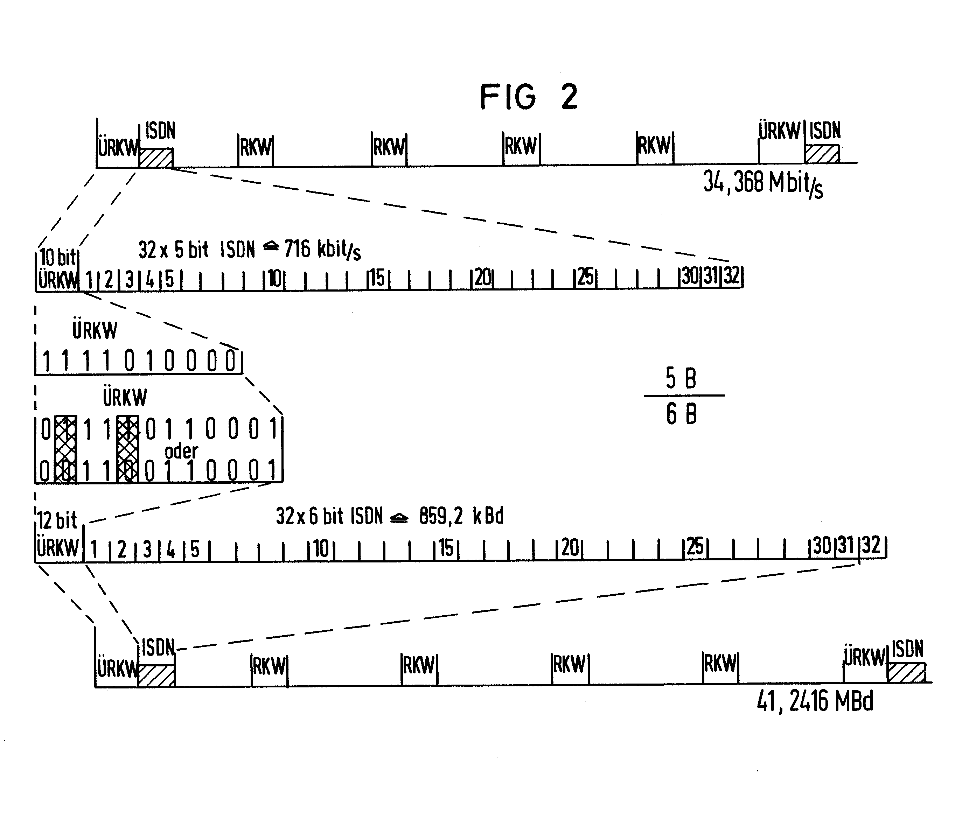

Figur 2 zeigt nicht maßstäblich den entsprechenden Pulsrahmenaufbau, wobei die obere Hälfte das Digitalsignal als Folge von 5B-Codewörtern zeigt, während die untere Hälfte das Digitalsignal als Folge von 6B-Codewörtern abgebildet ist. Die Darstellung in der 5B-Ebene dient hier der Verdeutlichung, denn der Vorgang des Einfügens und Abtrennens gehört in die 6B-Ebene. Das Überrahmenkennungswort ÜRKW ist ein an sich ganz normales Rahmenkennungswort RKW, welches sich von den anderen lediglich dadurch unterscheidet, daß seine zehn Bits in der 5B-Ebene genau in zwei aufeinander folgenden 5B-Codewörtern liegen. In der 6B-Ebene erscheint dieses Überrahmenkennungswort ÜRKW deshalb in zwei aufeinander folgenden 6B-Codewörtern. Von deren insgesamt zwölf Bit werden zehn bit für die Überrahmenkennungswort-Erkennung unmittelbar verwendet; zusätzlich müssen das nicht unmittelbar verwendete zweite und fünfte Bit gleich sein. Jedes fünfte Rahmenkennungswort RKW ist ein Überrahmenkennungswort ÜRKW; die anderen Rahmenkennungswörter RKW tragen zu mehr als zwei 6B-Codewörtern bei und bilden kein Überrahmenkennungswort.

Eine zweite Variante des erfindungsgemäßen Verfahrens ist dadurch gekennzeichnet, daß zur Bildung des Zeitmultiplexsignals von einem 34,368-Mbit/s-Digitalsignal mit CCITT-Pulsrahmen als Grundrahmen ausgegangen wird, daß die Baudrate des Zeitmultiplexsignals mit dem Breitbandsignal durch 5B/6B-Codierung auf 41,242 Mbd erhöht

0143268

wird, daß aus fünf aufeinanderfolgenden Grundrahmen ein Überrahmen gebildet wird, daß das Rahmenkennungswort des ersten Grundrahmens als Überrahmenkennungswort in zwei 6B-Codewörtern liegt und daß unter weiterer Erhöhung der Baudrate zwischen die 6B-Codewörter des 41,242-MBd-Digitalsignals eine feste Anzahl von Füllwörtern eingefügt wird.

Vorteilhaft ist es dabei, wenn ein leitungscodiertes Schmalbandsignal einer Bitfolge von $\frac{6}{5}$ · 2864 kbit/s gewählt wird und wenn das leitungscodierte Schmalbandsignal an die Stelle von einhundertachtundzwanzig Füllwörtern pro Überrahmen tritt, welche mit gleichen Abständen über den Überrahmen verteilt sind, so daß eine Gesamtbaudrate von 44,6784 MBd entsteht.

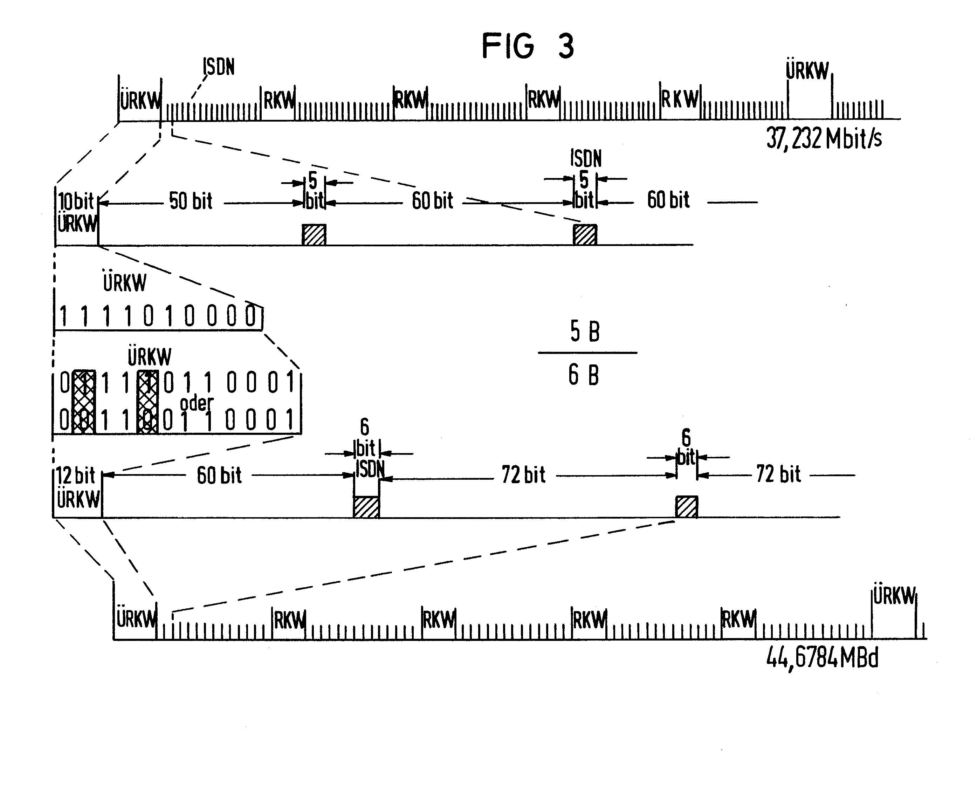

Figur 3 zeigt den nicht maßstäblich gezeigten Pulsrahmenaufbau zu dieser Variante, wobei die Art der Darstellung die gleiche ist wie in Figur 2. Die Baudrate ist hier um die der hinzugefügten Füllwörter erhöht. Diese Vorgehensweise wäre nicht sinnvoll, wenn das ergänzte Digitalsignal über CCITT-Leitungen übertragen werden würde, da es bereits ohne diese Erhöhung exakt der CCITT-Bitrate entspricht. Da diese Verfahrensweise jedoch vorwiegend für das Teilnehmernetz in Betracht kommt, kann es sinnvoll sein, hier eine höhere Bitrate als die vom CCITT empfohlene anzuwenden.

Eine vorteilhafte Ausgestaltung des erfindungsgemäßen Verfahrens ist dadurch gekennzeichnet, daß das Schmalbandsignal mit einer Frequenz abgetastet wird, die mehr als das Doppelte seiner Baudrate beträgt, daß jeder Abtastwert mit einem Bit codiert wird, daß jeweils vier Bits, die ein 4B-Codewort bilden, in ein Auswahlcodewort umgesetzt werden und daß die Auswahlcodewörter synchron gegen die Füllwörter im Zeitmultiplexsignal ausgetauscht werden.

Bei einer ersten, zu Figur 2 passenden Ausführungsform ist es vorteilhaft, wenn die Abtastfrequenz für das Schmalbandsignal 572,8 kHz beträgt und wenn die Bits von vier unmittelbar aufeinanderfolgenden Abtastproben, die ein 4B-Codewort bilden, in jeweils ein Auswahlcodewort mit der Baudrate $\frac{6}{5} \cdot 716$ kBd umgesetzt werden.

Bei einer zweiten, zu Figur 3 passenden Ausführungsform ist es vorteilhaft, wenn vier zueinander synchrone, plesiochrone oder asynchrone Schmalbandsignale mit je 572,8 kHz gleichzeitig abgetastet werden und wenn vier jeweils gleichzeitig gewonnene Abtastproben, die ein 4B-Codewort bilden, in jeweils ein Auswahlcodewort mit der Baudrate $\frac{6}{5} \cdot 2864$ kBd umgesetzt werden.

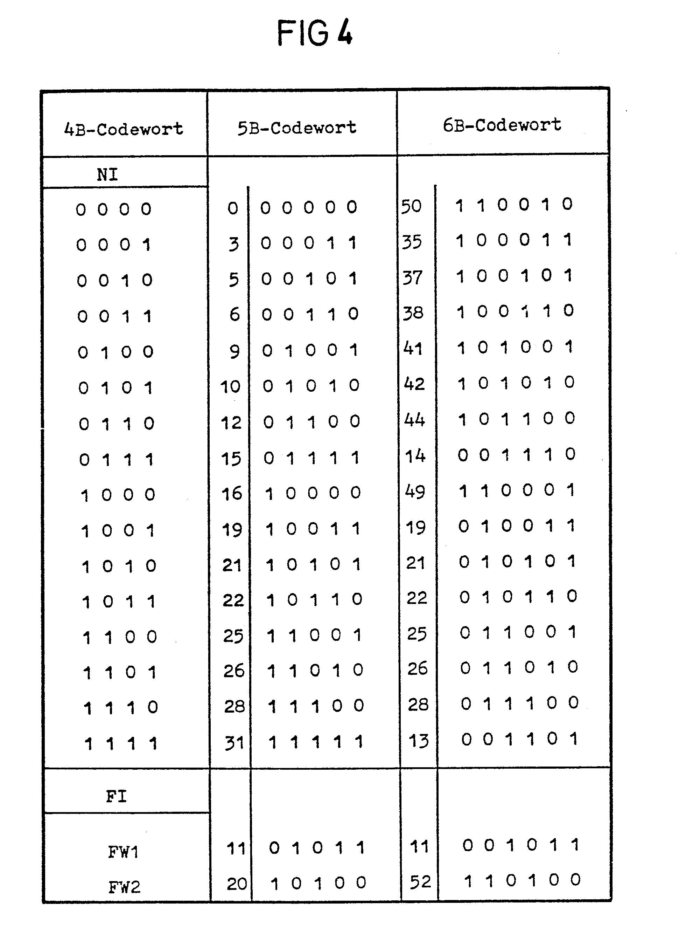

Eine Umsetzung vom 4B-Codewort zum 6B-Codewort erfolgt nach Figur 4, in welcher zur Verdeutlichung auch die zugehörigen 5B-Codewörter angegeben sind. Die Nutzinformation ist mit NI und die Füllinformation mit FI bezeichnet. Die beiden als Füllwörter verwendeten 6B-Codewörter FW1 und FW2 haben die Bedeutung eines digitalen Leerzeichens, solange in das Zeitmultiplexsignal kein 5B/6B-leitungscodiertes Schmalbandsignal eingefügt worden ist. Diese Füllwörter können auch wieder eingefügt werden, wenn das Schmalbandsignal wieder abgetrennt wird.

Das Umcodieren von 4B-Codewörtern in 6B-Codewörter ist mit einer langsamen Schaltung möglich, die leicht integrierbar ist. Dies erspart das Umcodieren des Breitbandsignals zum Zwecke des Einfügens oder Abtrennens, welches wegen der erforderlichen schnellen Schaltungstechnik aufwendig ist. Darin liegt ein Aufwandsvorteil der Erfindung.

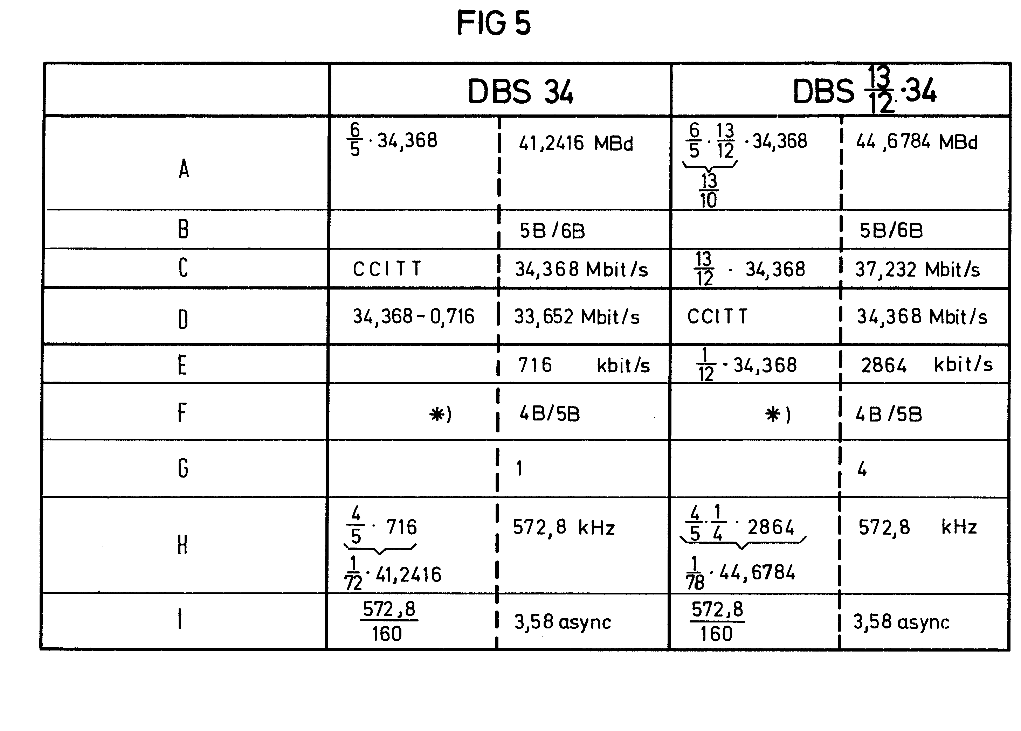

Eine Übersicht der beiden erfindungsgemäßen Varianten gibt Figur 5. Die Buchstaben A bis I haben folgende Bedeutung:

0143268

Telegrafiegeschwindigkeit des dig.Breitbandsignals    A

Leitungscode des digitalen Breitbandsignals    B

Gesamtbitrate des digitalen Breitbandsignals    C

Gesamtbitrate eines Bildes    D

Gesamtbitrate für ISDN-Signale    E

Kanalcode der ISDN-Abtastproben    F

Anzahl der ISDN-Kanäle    G

Abtastfrequenz im ISDN-Kanal    H

Abtastproben je ISDN-Bit    I

Ein *) bedeutet, daß der 4B/5B-Kanalcode und der 5B/6B-Leitungscode zu einem 4B/6B-Code zusammenfaßbar sind, d.h. daß eine ISDN-Einfügung bei Telegrafiegeschwindigkeit möglich ist.

In der ersten Zeile der Figur 5 ist für ein digitales Breitbandsignal DBS von ca 34 Mbit/s ersichtlich, daß die Erhöhung der Baudrate um den Faktor $\frac{13}{12}$ dazu führt, daß der Unterschied zwischen der Baudrate aus der Leitung von 44,6784 MBd und der Bitrate für das Bildsignal von 34,368 Mbit/s den Faktor $\frac{13}{10}$ entspricht, der sich ebenso einfach realisieren läßt, wie der Faktor $\frac{6}{5}$, welcher bei der 5B/6B-Leitungscodierung verwendet wird. Eine Taktfrequenzumsetzung mit einem dieser Faktoren wird erforderlich, wenn das Leitungssignal in ein CCITT-Schnittstellensignal mit einer Bitrate von 34,368 Mbit/s für die Fernübertragung umgewandelt werden soll.

Statt einer Erhöhung der Baudrate um den Faktor $\frac{13}{12}$ kommen auch andere Faktoren wie beispielsweise $\frac{55}{54}$, $\frac{85}{84}$, $\frac{115}{114}$ oder $\frac{25}{24}$ in Betracht, wobei der Faktor zwischen Leitungs-Baudrate und der CCITT-Schnittstellen-Bitrate $\frac{5}{4}$, $\frac{11}{9}$, $\frac{17}{14}$ oder $\frac{23}{19}$ wäre. Mit den gleichen Zahlenwerten läßt sich auch ein 140-Mbit/s-Digitalsignal behandeln.

Anordnungen zur Durchführung des erfindungsgemäßen Verfahrens sind den Unteransprüchen 9 - 10 zu entnehmen.

0143268

Anhand von Ausführungsbeispielen wird die Erfindung nachstehend näher erläutert.

Fig. 6 zeigt zwei Strecken für Zeitmultiplexsignale mit Ein- und Auskopplung,

Fig. 7 zeigt einen Einkoppler für die erste Verfahrensvariante,

Fig. 8 zeigt einen Auskoppler für die erste Verfahrensvariante,

Fig. 9 zeigt einen Einkoppler für die zweite Verfahrensvariante und

Fig. 10 zeigt einen Auskoppler für die zweite Verfahrensvariante.

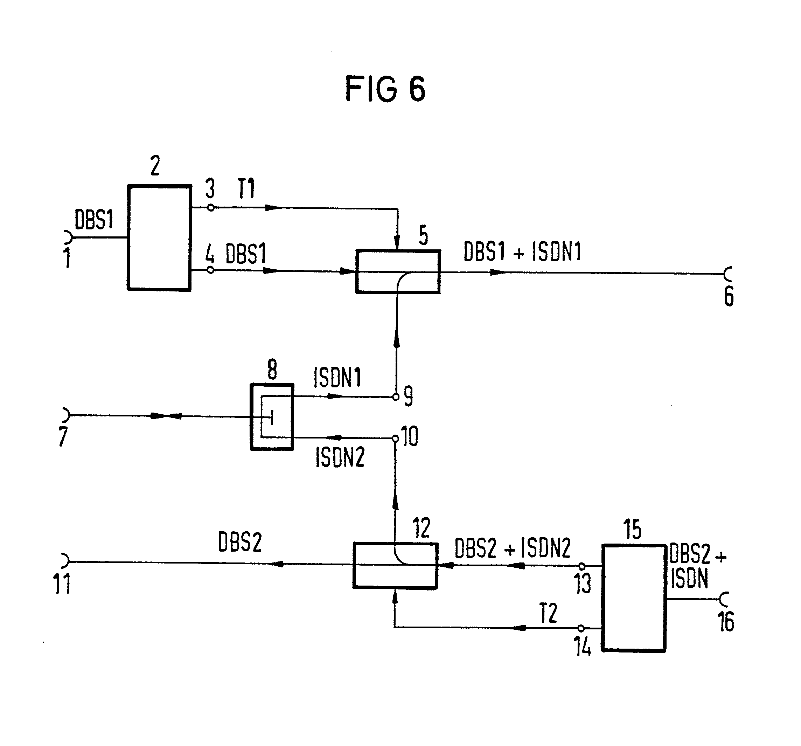

Figur 6 zeigt eine vom Eingang 1 zum Ausgang 6 gerichtete erste Übertragungsstrecke für ein erstes Zeitmultiplexsignal und eine vom Eingang 16 zum Ausgang 11 gerichtete zweite Übertragungsstrecke für ein zweites Zeitmultiplexsignal der Gegenrichtung.

Die Anordnung enthält Regeneratoren mit Takterzeugung 2 und 15, einen Einkoppler 5, einen Auskoppler 12, eine Gabel 8 und einen Zweidrahtanschluß 7 für ISDN-Schmalbandsignale.

Im Einkoppler 5 wird das erste Zeitmultiplexsignal mit dem digitalen Breitbandsignal DBS1 durch das Schmalbandsignal ISDN1 ergänzt, indem letzteres gegen Füllwörter ausgetauscht wird. Im Auskoppler 12 wird dem zweiten Zeitmultiplexsignal ein ISDN-Schmalbandsignal ISDN2 entnommen.

Die Gabel 8 sorgt dafür, daß die ISDN-Schmalbandsignale ISDN1 und ISDN2 über die Zweidrahtleitung mit der Klemme 7 laufen können.

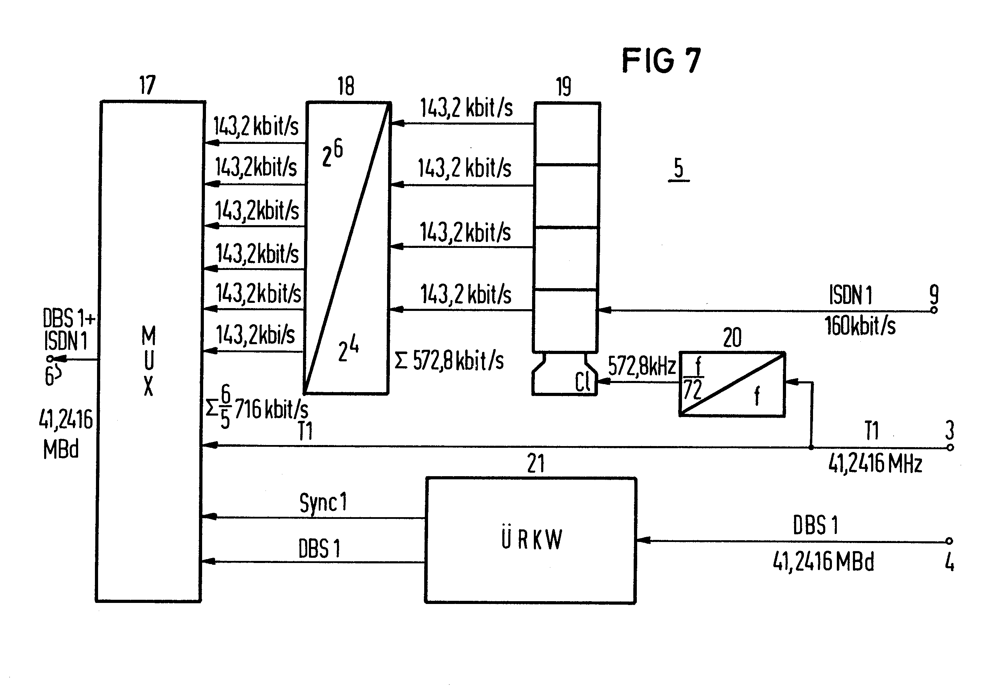

Figur 7 zeigt die praktische Ausführung des Einkopplers 5 nach Figur 6 für die erste Verfahrensvariante. Der Einkoppler 5 enthält einen Multiplexer 17, einen 4B/6B-Codeumsetzer 18, einen Serienparallelumsetzer 19, einen Frequenzteiler 20 und eine Erkennungseinrichtung 21 für das Überrahmenkennungswort ÜRKW.

Das Zeitmultiplexsignal mit dem Breitbandsignal DBS1 und Füllwörtern gelangt über die Erkennungseinrichtung 21 zum Multiplexer 17. Die Erkennungseinrichtung 21 leitet ein Synchronsignal Sync1 ab, das ebenfalls zum Multiplexer 17 geführt wird. Der Takt T1 des Zeitmultiplexsignals läuft über den Eingang 3 zum Multiplexer 17 und zum Frequenzteiler 20. Letzterer leitet den Takt für den Serienparallelumsetzer 19 ab. Das am Eingang 9 anliegende ISDN-Signal ISDN1 wird im Serienparallelumsetzer 19 in 4B-Codewörter umgesetzt, die über den 4B/6B-Codeumsetzer 18 schließlich auch zum Multiplexer 17 gelangen. Dort wird das ISDN-Signal ISDN1 evtl. im Austausch Füllwörter in das Zeitmultiplexsignal eingefügt, das am Ausgang 6 abgenommen werden kann. Die verwendeten Bitraten und Frequenzen sind Figur 7 zu entnehmen.

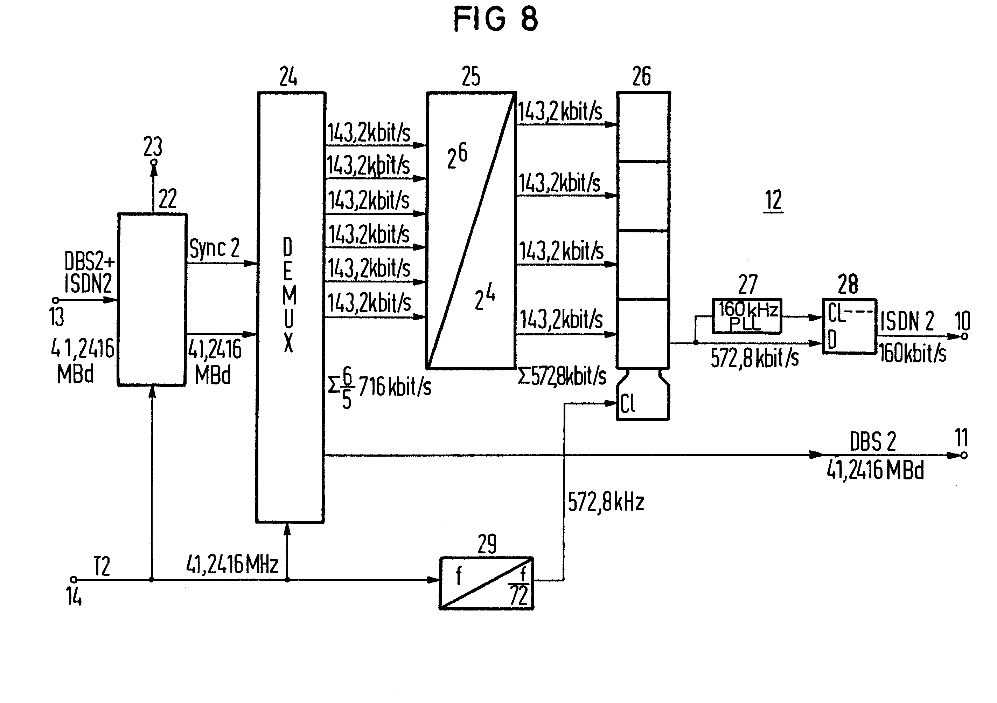

Figur 8 zeigt einen Auskoppler 12 gemäß Figur 6 für die erste Verfahrensvariante. Die Anordnung erhält eine Erkennungseinrichtung 22 mit einem Ausgang 23 für Indikation und Rahmensynchronisation, einen Demultiplexer 24, einen 6B/4B-Codeumsetzer 25, einen Parallelserienumsetzer 26, einen Phasenregelkreis 27, ein D-Flipflop 28 und einen Frequenzteiler 29.

Dem Eingang 13 wird ein Zeitmultiplexsignal mit einem digitalen Breitbandsignal DBS2 und einem digitalen ISDN-Schmalbandsignal ISDN2 zugeführt. Dieses Signal gelangt über die Erkennungseinrichtung 22 für das Überrahmenkennungswort ÜRKW zum Demultiplexer 24. Die Erkennungseinrichtung 22 gibt neben einem Signal für Indikation und Rahmensynchronisation am Ausgang 23 weiter ein Synchronsignal Sync2 zum Demultiplexer 24, welcher einerseits das digitale Breitbandsignal DBS2 an den Ausgang 11 und andererseits 6B-Codewörter des ISDN2-Signals an den 6B/4B-Codeumsetzer 25 abgibt. Dieser führt die 4B-Codewörter zu den Parallelserienumsetzer 26, dessen Ausgangssignal an das vom Phasenregelkreis 27 gesteuerte D-Flipflop 28 gelangt. Am Ausgang 10 erscheint das ISDN-Signal ISDN2. Die Erkennungseinrichtung 22, der Demultiplexer 24 und der Frequenzteiler 29 werden über den Eingang 14 vom Takt gesteuert. Das Ausgangssignal des Frequenzteilers 29 steuert wiederum den Parallelserienumsetzer 26.

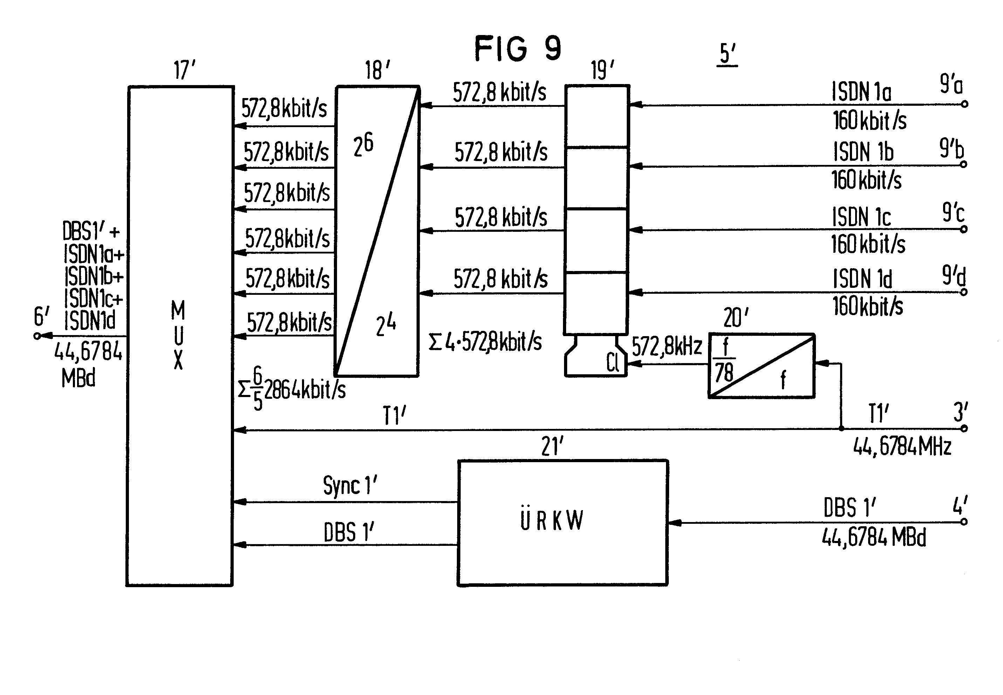

Figur 9 zeigt einen Einkoppler 5' gemäß Figur 6 für die zweite Verfahrensvariante. Da bei dieser Variante zumindest die Dimensionierung vom Einkoppler nach Figur 7 abweicht, sind alle Bezugszeichen mit einem Apostroph versehen.

Der Einkoppler 5' enthält einen Multiplexer 17', einen 4B/6B-Codeumsetzer 18', einen Registerspeicher 19', einen Frequenzteiler 20' und eine Erkennungseinrichtung 21' für das Überrahmenkennungswort ÜRKW.

Abweichend von der Anordnung nach Figur 7 werden vier Schmalbandsignale ISDN1a bis ISDN1d zugeführt, die im Registerspeicher 19' in 4B-Codewörter umgesetzt werden. Abgesehen von anderen Bitraten arbeitet dieser Auskoppler 5' ansonsten wie der Auskoppler 5 nach Figur 7.

0143268

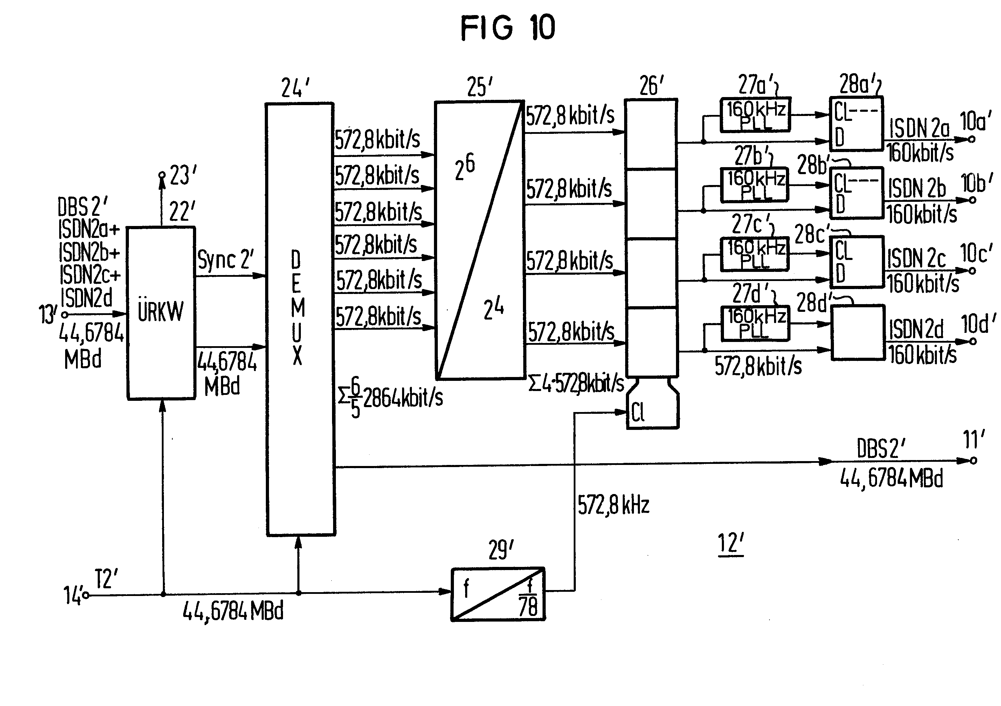

Figur 10 zeigt einen Auskoppler 12' nach Figur 6 für die zweite Verfahrensvariante. Auch hier sind die Bezugszeichen wegen teilweise abweichender Wirkungsweise mit einem Apostroph gekennzeichnet. Die Anordnung enthält eine Erkennungseinrichtung 22' für das Überrahmenkennungswort ÜRKW und einen Ausgang 23' für Indikation und Rahmensynchronisation, einen Demultiplexer 24', einen 6B/4B-Codeumsetzer 25', einen Registerspeicher 26', vier Phasenregelkreise 27a'. bis 27d'., vier D-Flipflops 28a' bis 28d' und einen Frequenzteiler 29'.

Im Gegensatz zum Auskoppler 12 nach Figur 8 enthält das Zeitmultiplexsignal am Eingang 13' vier ISDN-Schmalbandsignale ISDN2a bis ISDN2d. Diese werden mit anderen Bitraten in 4B-Codewörter umgesetzt, die im Registerspeicher 26' in vier Ausgangssignale umgesetzt werden, welche an den Ausgängen 10a'. bis 10d' als ISDN-Schmalbandsignale ISDN2a bis ISDN2d entnommen werden können.

10 Patentansprüche
10 Figuren

0143268

83 P 1752 E

Patentansprüche

1. Verfahren zum Einfügen eines digitalen binären Schmalbandsignals in ein oder zum Abtrennen dieses Schmalbandsignals aus einem Zeitmultiplexsignal, d a d u r c h   g e k e n n z e i c h n e t , daß im Zeitmultiplexsignal ein Breitbandsignal mit Synchron-Wort in einem binären 5B/6B-Leitungscode, der für einige 5B-Codewörter in der positiven und negativen Gruppe gleiche 6B-Codewörter (Auswahlcodewörter) enthält, sowie zusätzliche Auswahlcodewörter als Füllwörter übertragen werden, daß für das Schmalbandsignal ebenfalls der 5B/6B-Leitungscode und ausschließlich Auswahlcodewörter verwendet werden, daß das Schmalbandsignal am Einfügungsort synchron gegen wenigstens ein Füllwort ausgewechselt wird und daß das Schmalbandsignal am Abtrennort aufgrund des Synchronwortes erkannt und ausgekoppelt wird.

2. Verfahren nach Anspruch 1, d a d u r c h   g e k e n n z e i c h n e t , daß bei der Bildung des Zeitmultiplexsignals von einem 34,368-Mbit/s-Digitalsignal mit CCITT-Pulsrahmen als Grundrahmen ausgegangen wird, daß das Zeitmultiplexsignal mit dem Breitbandsignal der 5B/6B-Leitungscodierung unterworfen wird, daß aus fünf aufeinanderfolgenden Grundrahmen ein Überrahmen gebildet wird, daß das Rahmenkennungswort des ersten Grundrahmens im Überrahmen als Überrahmenkennungswort in zwei 6B-Codewörtern liegt und daß je Überrahmen eine feste Anzahl 6B-Codewörter als Füllwörter dienen.

0143268

3. Verfahren nach Anspruch 2,

d a d u r c h   g e k e n n z e i c h n e t ,

daß ein leitungscodiertes Schmalbandsignal einer Bitfolge von $\frac{6}{5}$ · 716 kbit/s gewählt wird und

daß dem Überrahmenkennungswort zweiunddreißig Füllwörter unmittelbar folgen.

4. Verfahren nach Anspruch 1,

d a d u r c h   g e k e n n z e i c h n e t ,

daß zur Bildung des Zeitmultiplexsignals von einem
34,368-Mbit/s-Digitalsignal mit CCITT-Pulsrahmen als
Grundrahmen ausgegangen wird,

daß die Baudrate des Zeitmultiplexsignals mit dem Breitbandsignal durch 5B/6B-Codierung auf 41,242 MBd erhöht
wird,

daß aus fünf aufeinanderfolgenden Grundrahmen ein Überrahmen gebildet wird,

daß das Rahmenkennungswort des ersten Grundrahmens als
Überrahmenkennungswort in zwei 6B-Codewörtern liegt und daß unter weiterer Erhöhung der Baudrate zwischen die
6B-Codewörter des 41,242-MBd-Digitalsignals eine feste
Anzahl von Füllwörtern eingefügt wird.

5. Verfahren nach Anspruch 4,

d a d u r c h   g e k e n n z e i c h n e t ,

daß ein leitungscodiertes Schmalbandsignal einer Bitfolge von $\frac{6}{5}$ · 2864 kbit/s gewählt wird und

daß das leitungscodierte Schmalbandsignal an die Stelle
von einhundertachtundzwanzig Füllwörtern pro Überrahmen
tritt, welche mit gleichen Abständen über den Überrahmen verteilt sind, so daß eine Gesamtbaudrate von
44,6784 MBd entsteht.

6. Verfahren nach Anspruch 1,

d a d u r c h   g e k e n n z e i c h n e t ,

daß das Schmalbandsignal mit einer Frequenz abgetastet
wird, die mehr als das Doppelte seiner Baudrate beträgt,

daß jeder Abtastwert mit einem Bit codiert wird,

daß jeweils vier Bits, die ein 4B-Codewort bilden, in Auswahlcodewörter umgesetzt werden und

daß die Auswahlcodewörter synchron gegen die Füllwörter im Zeitmultiplexsignal ausgetauscht werden.

7. Verfahren nach den Ansprüchen 3 und 6, d a d u r c h   g e k e n n z e i c h n e t , daß die Abtastfrequenz für das Schmalbandsignal 572,8 kHz beträgt und

daß die Bits von vier unmittelbar aufeinanderfolgenden Abtastproben, die ein 4B-Codewort bilden, in jeweils ein Auswahlcodewort mit der Baudrate $\frac{6}{5} \cdot 716$ kBd umgesetzt werden.

8. Verfahren nach den Ansprüchen 5 und 6, d a d u r c h   g e k e n n z e i c h n e t , daß vier zueinander synchrone, plesiochrone oder asynchrone Schmalbandsignale mit je 572,8 kHz gleichzeitig abgetastet werden und

daß vier jeweils gleichzeitig gewonnene Abtastproben, die ein 4B-Codewort bilden, in jeweils ein Auswahlcodewort mit der Baudrate $\frac{6}{5} \cdot 2864$ kBd umgesetzt werden.

9. System zur Durchführung des Verfahrens nach den Ansprüchen 2 oder 3, d a d u r c h   g e k e n n z e i c h n e t , daß als Einkoppler ein Serienparallelumsetzer (19), der ein Schmalbandsignal in 4B-Codewörter umsetzt, ein 4B/6B-Codeumsetzer (18) und ein Multiplexer (17) zur Bildung des Zeitmultiplexsignals vorgesehen sind und

daß als Auskoppler ein Demultiplexer (24) zur Abtrennung des Schmalbandsignals (ISDN2), ein 6B/4B-Codeumsetzer (25), ein Parallelserienumsetzer (26) zur Umsetzung der 4B-Codewörter und ausgangsseitig ein von

- 16 -        VPA 83 P 1752 E

einem Phasenregelkreis (27) gesteuertes D-Flipflop (28) vorgesehen sind.

10. System zur Durchführung des Verfahrens nach einem der Ansprüche 4 oder 5,
d a d u r c h   g e k e n n z e i c h n e t,
daß als Einkoppler ein Registerspeicher (19'), der vier Schmalbandsignale (ISDN1a bis ISDN1d) in 4B-Codewörter umsetzt, ein 4B/6B-Codeumsetzer (18') und ein Multiplexer (17') zur Bildung des Zeitmultiplexsignals vorgesehen sind und
daß als Auskoppler ein Demultiplexer (24') zur Abtrennung der Schmalbandsignale (ISDN2a bis ISDN2d), ein 6B/4B-Codeumsetzer (24'), ein Registerspeicher (26') zur Umsetzung von 4B-Codewörtern in vier Schmalbandsignale (ISDN2a bis ISDN2d) und vier  von vier Phasenregelkreisen (27a' bis 27d') gesteuerte D-Flipflops (28a' bis 28d') pro Ausgang (10a' bis 10d') vorgesehen sind.

# FIG 1

0143268

| 5B-Codewort | | 6B-Codewort | | | | | |
|---|---|---|---|---|---|---|---|
| | | Gruppe + | | Folge-gruppe | Gruppe - | | Folge-gruppe |
| 0 | 00000 | 50 | 110010 | + | 50 | 110010 | - |
| 1 | 00001 | 51 | 110011 | - | 33 | 100001 | + |
| 2 | 00010 | 54 | 110110 | - | 34 | 100010 | + |
| 3 | 00011 | 35 | 100011 | + | 35 | 100011 | - |
| 4 | 00100 | 53 | 110101 | - | 36 | 100100 | + |
| 5 | 00101 | 37 | 100101 | + | 37 | 100101 | - |
| 6 | 00110 | 38 | 100110 | + | 38 | 100110 | - |
| 7 | 00111 | 39 | 100111 | - | 7 | 000111 | - |
| 8 | 01000 | 43 | 101011 | - | 40 | 101000 | + |
| 9 | 01001 | 41 | 101001 | + | 41 | 101001 | - |
| 10 | 01010 | 42 | 101010 | + | 42 | 101010 | - |
| 11 | 01011 | 11 | 001011 | + | 11 | 001011 | - |
| 12 | 01100 | 44 | 101100 | + | 44 | 101100 | - |
| 13 | 01101 | 45 | 101101 | - | 5 | 000101 | + |
| 14 | 01110 | 46 | 101110 | - | 6 | 000110 | + |
| 15 | 01111 | 14 | 001110 | + | 14 | 001110 | - |
| 16 | 10000 | 49 | 110001 | + | 49 | 110001 | - |
| 17 | 10001 | 57 | 111001 | - | 17 | 010001 | + |
| 18 | 10010 | 58 | 111010 | - | 18 | 010010 | + |
| 19 | 10011 | 19 | 010011 | + | 19 | 010011 | - |
| 20 | 10100 | 52 | 110100 | + | 52 | 110100 | - |
| 21 | 10101 | 21 | 010101 | + | 21 | 010101 | - |
| 22 | 10110 | 22 | 010110 | + | 22 | 010110 | - |
| 23 | 10111 | 23 | 010111 | - | 20 | 010100 | + |
| 24 | 11000 | 56 | 111000 | + | 24 | 011000 | + |
| 25 | 11001 | 25 | 011001 | + | 25 | 011001 | - |
| 26 | 11010 | 26 | 011010 | + | 26 | 011010 | - |
| 27 | 11011 | 27 | 011011 | - | 10 | 001010 | + |
| 28 | 11100 | 28 | 011100 | + | 28 | 011100 | - |
| 29 | 11101 | 29 | 011101 | - | 9 | 001001 | + |
| 30 | 11110 | 30 | 011110 | - | 12 | 001100 | + |
| 31 | 11111 | 13 | 001101 | + | 13 | 001101 | - |

# FIG 2

ÜRKW | ISDN | RKW | RKW | RKW | RKW | ÜRKW | ISDN

34,368 Mbit/s

10 bit
ÜRKW

32 × 5 bit ISDN ≙ 716 kbit/s

ÜRKW |1|2|3|4|5| | | |10| | | |15| | | |20| | | |25| | | |30|31|32|

ÜRKW

1 1 1 1 0 1 0 0 0 0

$$\frac{5\ B}{6\ B}$$

ÜRKW

0 █ 1 1 █ 0 1 1 0 0 0 1

oder

0 █ 1 1 █ 0 1 1 0 0 0 1

12 bit
ÜRKW

32 × 6 bit ISDN ≙ 859,2 k Bd

ÜRKW |1|2|3|4|5| | | |10| | | |15| | | |20| | | |25| | | |30|31|32|

ÜRKW | ISDN | RKW | RKW | RKW | RKW | ÜRKW | ISDN

41, 2416 MBd

# FIG 3

3/10

0143268

# FIG 4

| 4B-Codewort | 5B-Codewort | | 6B-Codewort | |
|---|---|---|---|---|
| NI | | | | |
| 0 0 0 0 | 0 | 0 0 0 0 0 | 50 | 1 1 0 0 1 0 |
| 0 0 0 1 | 3 | 0 0 0 1 1 | 35 | 1 0 0 0 1 1 |
| 0 0 1 0 | 5 | 0 0 1 0 1 | 37 | 1 0 0 1 0 1 |
| 0 0 1 1 | 6 | 0 0 1 1 0 | 38 | 1 0 0 1 1 0 |
| 0 1 0 0 | 9 | 0 1 0 0 1 | 41 | 1 0 1 0 0 1 |
| 0 1 0 1 | 10 | 0 1 0 1 0 | 42 | 1 0 1 0 1 0 |
| 0 1 1 0 | 12 | 0 1 1 0 0 | 44 | 1 0 1 1 0 0 |
| 0 1 1 1 | 15 | 0 1 1 1 1 | 14 | 0 0 1 1 1 0 |
| 1 0 0 0 | 16 | 1 0 0 0 0 | 49 | 1 1 0 0 0 1 |
| 1 0 0 1 | 19 | 1 0 0 1 1 | 19 | 0 1 0 0 1 1 |
| 1 0 1 0 | 21 | 1 0 1 0 1 | 21 | 0 1 0 1 0 1 |
| 1 0 1 1 | 22 | 1 0 1 1 0 | 22 | 0 1 0 1 1 0 |
| 1 1 0 0 | 25 | 1 1 0 0 1 | 25 | 0 1 1 0 0 1 |
| 1 1 0 1 | 26 | 1 1 0 1 0 | 26 | 0 1 1 0 1 0 |
| 1 1 1 0 | 28 | 1 1 1 0 0 | 28 | 0 1 1 1 0 0 |
| 1 1 1 1 | 31 | 1 1 1 1 1 | 13 | 0 0 1 1 0 1 |
| FI | | | | |
| FW1 | 11 | 0 1 0 1 1 | 11 | 0 0 1 0 1 1 |
| FW2 | 20 | 1 0 1 0 0 | 52 | 1 1 0 1 0 0 |

## FIG 5

| | DBS 34 | | DBS $\frac{13}{12}\cdot 34$ | |
|---|---|---|---|---|
| A | $\frac{6}{5}\cdot 34{,}368$ | 41,2416 MBd | $\underbrace{\frac{6}{5}\cdot\frac{13}{12}}_{\frac{13}{10}}\cdot 34{,}368$ | 44,6784 MBd |
| B | | 5B/6B | | 5B/6B |
| C | CCITT | 34,368 Mbit/s | $\frac{13}{12}\cdot 34{,}368$ | 37,232 Mbit/s |
| D | $34{,}368-0{,}716$ | 33,652 Mbit/s | CCITT | 34,368 Mbit/s |
| E | | 716 kbit/s | $\frac{1}{12}\cdot 34{,}368$ | 2864 kbit/s |
| F | *) | 4B/5B | *) | 4B/5B |
| G | | 1 | | 4 |
| H | $\underbrace{\frac{4}{5}\cdot 716}_{\frac{1}{72}\cdot 41{,}2416}$ | 572,8 kHz | $\underbrace{\frac{4}{5}\cdot\frac{1}{4}\cdot 2864}_{\frac{1}{78}\cdot 44{,}6784}$ | 572,8 kHz |
| I | $\frac{572{,}8}{160}$ | 3,58 async | $\frac{572{,}8}{160}$ | 3,58 async |

0143268

6/10

FIG 6

# FIG 7

# FIG 8

FIG 9

9/10

0143268

# FIG 10

014 3268